# EUROPEAN PATENT SPECIFICATION

(11) **EP 4 523 032 B1**
(45) Date of publication and mention of the grant of the patent: **04.11.2026**
(21) Application number: 23731784.7
(22) Date of filing: 11.05.2023
(51) Int. Cl.: G02B 27/01

(54) **BALANCING EXTERNAL LIGHT AND GENERATED IMAGE LIGHT IN DISPLAYS**
AUSGLEICHEN VON AUSSENLICHT UND ERZEUGTEM BILDLICHT IN ANZEIGEN
ÉQUILIBRAGE DE LUMIÈRE EXTERNE ET DE LUMIÈRE D'IMAGE GÉNÉRÉE DANS DES AFFICHAGES

(30) Priority: 12.05.2022 US 202263341416 P; 26.07.2022 US 202263392430 P; 21.03.2023 US 202318124445
(43) Date of publication of application: 19.03.2025
(73) Proprietor: Meta Platforms Technologies, LLC, Menlo Park, CA 94025 (US)
(72) Inventor: MCELDOWNEY, Scott Charles, Menlo Park, California 94025 (US); FENG, Xiayu, Menlo Park, California 94025 (US); HE, Sihui, Menlo Park, California 94025 (US); AMIRSOLAIMANI, Babak, Menlo Park, California 94025 (US); HUANG, Yuge, Menlo Park, California 94025 (US); SHI, Zhujun, Menlo Park, California 94025 (US); LANDIG, Renate Eva Klementine, Menlo Park, California 94025 (US); GOLLIER, Jacques, Menlo Park, California 94025 (US); YANG, Yang, Menlo Park, California 94025 (US)
(74) Representative: Murgitroyd & Company
(86) International application number: PCT/US2023/021926
(87) International publication number: WO 2023/220301

(56) References cited:
- WO-A1-2021/030093
- WO-A1-2022/052949
- CN-U- 210 323 583
- KR-A- 20210 004 776
- US-A1- 2019 361 241
- US-A1- 2021 405 374
- US-A1- 2021 405 380
- US-B1- 10 712 576

## Description

### TECHNICAL FIELD

The present disclosure relates to visual display devices and related components, modules, and methods.

### BACKGROUND

Visual displays provide information to viewer(s) including still images, video, data, etc. Visual displays have applications in diverse fields including entertainment, education, engineering, science, professional training, advertising, to name just a few examples. Some visual displays, such as TV sets, display images to several users at a time, and some visual display systems, such as near-eye displays (NEDs), are intended for individual users.

An artificial reality system generally includes an NED (e.g., a headset or a pair of glasses) configured to present content to a user. The near-eye display may display virtual objects or combine images of real objects with virtual objects, as in virtual reality (VR), augmented reality (AR), or mixed reality (MR) applications. For example, in an AR system, a user may view images of virtual objects (e.g., computer-generated images (CGIs)) superimposed with the surrounding environment by seeing through a "combiner" component. The combiner of a wearable display is typically transparent to external light but includes some light routing optics to direct the display light into the user's field of view.

Because a display of HMD or NED is usually worn on the head of a user, a large, bulky, unbalanced, and/or heavy display device with a heavy battery would be cumbersome and uncomfortable for the user to wear. Head-mounted display devices require compact and efficient optical train that conveys an image generated by a microdisplay or a beam scanner to the user's eyes, such that the generated image is visible at all lighting conditions.

US 2021/405374 A1 discloses techniques for operating an optical system in a first state and a second state. World light may be linearly polarized along a first axis. When the optical system is operating in accordance with a first state, a polarization of the world light may be rotated by 90 degrees, the world light may be linearly polarized along a second axis perpendicular to the first axis, and zero net optical power may be applied to the world light. When the optical system is operating in accordance with a second state, virtual image light may be projected onto an eyepiece of the optical system, the world light and the virtual image light may be linearly polarized along the second axis, a polarization of the virtual image light may be rotated by 90 degrees, and non-zero net optical power may be applied to the virtual image light.

### SUMMARY

According to a first aspect, there is provided a near-eye display (NED) comprising: a first polarizer in a path of external light to an eyebox of the NED, the first polarizer configured to polarize the external light to have a first polarization state; a see-through lightguide disposed in the path between the first polarizer and the eyebox, the lightguide being configured to convey image light to the eyebox in a second polarization state while transmitting the external light to the eyebox in the first polarization state, wherein the second polarization state is orthogonal to the first polarization state; and a second polarizer in the path downstream of the see-through lightguide, the second polarizer being configured to variably adjust a power balance of the external light and the image light at the eyebox.

The second polarizer may be mechanically rotatable to vary the power balance. The first polarizer may be mechanically rotatable for adjusting the first polarization state. The first polarizer may be electrically tunable to rotate a transmission axis thereof. The first and second polarization states may be linear polarization states. The NED may comprise a polarization rotator between the first polarizer and the lightguide. The NED may comprise a laterally-offset projector operably coupled to the see-through lightguide for providing the image light thereto. The projector may be tunable in brightness. The see-through lightguide may comprise a volume holographic grating for coupling the image light out of the lightguide. The see-through lightguide may comprise a liquid crystal grating.

According to a second aspect, there is provided a method of adjusting relative brightness of image light and external light in a near-eye display (NED), the method comprising: polarizing the external light to have a first polarization state; providing the image light at a second, orthogonal polarization state, on a common optical path with the external light; conveying the image light and the external light to the eyebox; and adjusting a polarizer in the common optical path to variably change a brightness balance between the external light and the image light.

The adjusting may comprise mechanically rotating the polarizer. The adjusting may comprise electronically tuning the polarizer to rotate a transmission axis thereof. The polarizing may comprise mechanically rotating or electrically tuning an input polarizer to adjust the first polarization state. The method may comprise combining the external light with the image light to propagate along the common optical path. The first polarization state may be linear. The method may comprise propagating the external light in the first polarization state through a polarization rotator prior to the combining to adjust the first polarization state.

### BRIEF DESCRIPTION OF THE DRAWINGS

Examples will now be described in conjunction with the drawings, in which:
FIG. 1 is a schematic side view of a near-eye display of this disclosure;
FIG. 2 is a schematic plan view of a rotatable polarizer;
FIG. 3 is a schematic side view of an example of the near-eye display of FIG. 1 with electronically tunable output polarizer;
FIG. 4 is a schematic side view of an example of the near-eye display of FIG. 1 with a polarization rotator for external light;
FIG. 5 is a schematic side view of an example of the near-eye display of FIG. 1 with electronically tunable output polarizer;
FIG. 6 is a schematic side view of a polarization volume hologram (PVH) example of the near-eye display of FIG. 1;
FIG. 7 is a flow chart of a method for adjusting brightness of image light of the near-eye display of FIG. 1 or FIG. 2 relative to external light;
FIG. 8 is a view of a wearable display of this disclosure having a form factor of a pair of eyeglasses; and
FIG. 9 is a three-dimensional view of a head-mounted display (HMD) according to an example of this disclosure.

### DETAILED DESCRIPTION

While the present teachings are described in conjunction with various embodiments and examples, it is not intended that the present teachings be limited to such embodiments. On the contrary, the present teachings encompass various alternatives and equivalents, as will be appreciated by those of skill in the art. All statements herein reciting principles, aspects, and embodiments of this disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

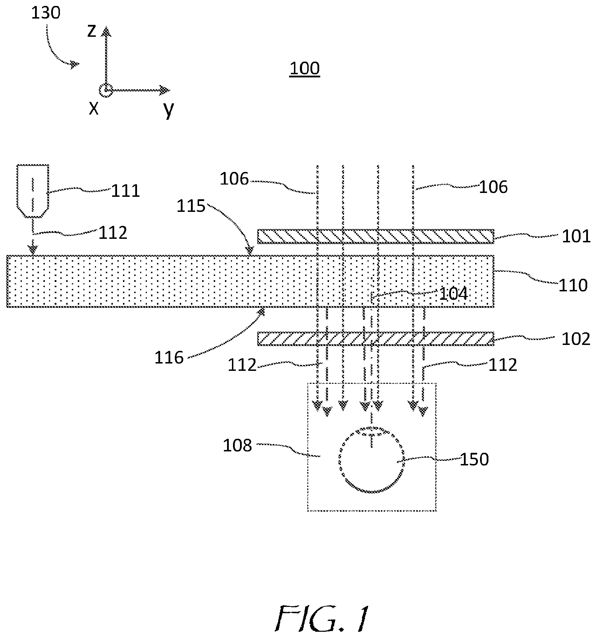

As used herein, the terms "first", "second", and so forth are not intended to imply sequential ordering, but rather are intended to distinguish one element from another, unless explicitly stated. Similarly, sequential ordering of method steps does not imply a sequential order of their execution, unless explicitly stated. Furthermore, as used herein, the term "polarized light" as used herein encompasses partially polarized light having at least 80% of the light power in one polarization state, and no more than 20% of the light energy in the orthogonal polarization state. Similarly, "polarizing light to a first (second) polarization state" means polarizing the light so that at least 80% of the light power is in the first (second) polarization state. The term "predominantly in a first (second) polarization state" means that at least 80% of the light power is in the first (second) polarization state. In FIG. 1 and FIGs. 3 to 6, similar reference numerals denote similar elements.

In an AR display, the display-generated image light needs to be bright enough for the generated imagery to be discernable on the background of external visible environment. The external light may vary by several orders of magnitude depending on where the wearer or user of the AR display is located. The lighting conditions may differ dramatically. For example, the lighting brightness may differ by several orders of magnitude between broad daylight and a dark room.

In accordance with this disclosure, a near-eye display may be equipped with a polarization-selective combiner element carrying image light in one polarization while transmitting through external light of the other, orthogonal polarization. An adjustable polarizer may be placed in the common optical path of the external and generated image light, to propagate adjustable portions of both. By adjusting the polarizer, an optical power ratio between the external light from the environment and internally generated image light may be adjusted in a broad range, allowing a simple and efficient accommodation of external brightness conditions.

Referring now to FIG. 1, a near-eye display (NED) 100 includes a first polarizer 101 in a path 104 of external light 106, schematically shown by dotted lines, to an eyebox 108 of the near-eye display 100 for at least partially polarizing the external light 106 to a first polarization state. A lightguide 110 is disposed in the path 104 downstream of the first polarizer 101 for conveying image light 112 to the eyebox 108. The image light 112, shown by the dashed lines, is generated by a projector 111 that is laterally offset from the path 104 and the eyebox 108. The eyebox 108 defines an area where an eye 150 of a user may be located for good-quality viewing of images generated by the projector 111 and conveying to the eye 150 by the lightguide 110. In one example, the image light 112 exits the lightguide 110 being at least partially polarized, so that at least 80% of the light power is in a second polarization state orthogonal to the first polarization state. For the external light 106 that is incident upon an outer surface 115 of the lightguide 110 across from the eyebox 108, the lightguide 110 is at least partially transparent, i.e. "see-through". The external light 106 propagates through the lightguide 110 to exit the lightguide 110, through an opposite surface 116 thereof facing the eyebox 108, in the first polarization state to co-propagate with the image light 112 downstream of the lightguide 110. The lightguide 110 is therefore a combiner that combines the external light 106 in the first polarization state with the image light 112 of the second polarization state to co-propagate toward the eyebox 108.

The projector 111 may include a scanning projector or a micro-display based projector. In some examples, the projector 111 may be configured to provide the image light 112 in a well-defined polarization state. In some examples, the lightguide 110 may change a state of polarization of the image light 112 downstream of the lightguide 110 to the second polarization state.

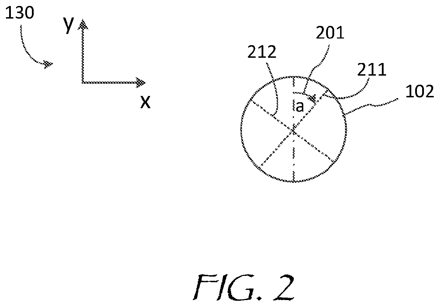

A second polarizer 102 is disposed downstream of the lightguide 110 in the path 104 common to the external light 106 and the image light 112. The second polarizer 102 is operable to variably adjust a power balance of the external light 106 and the image light 112 at the eyebox 108. For linear polarizations, the external light 106 may be polarized by the first polarizer 101, e.g., along the X-axis of a Cartesian coordinate system 130, and the image light 112 out-coupled by the lightguide 110 may be polarized along the Y-axis of the Cartesian coordinate system 130. The (X,Y) plane of the Cartesian coordinate system 130 is parallel or tangential (for curved waveguides) to the main opposing surfaces 115, 116 of the lightguide 110. The second polarizer 102 transmits a portion of the external light 106 and a portion of the image light 112 toward the eyebox 108. The second polarizer 102 may include e.g. a linear polarizer that may be rotated in XY plane to vary the transmitted portions of the image light 112 and the external light 106 in opposite directions, thereby adjusting the power balance of the image and external light at the eyebox 108. The optical power ratio of the portions of the image light 112 and the external light 106 transmitted through the polarizer 102 depends on an angle of rotation of the linear polarizer 102 in XY plane, e.g. angle α denoted at 201 in FIG. 2. When, for example, the second polarizer 102 is oriented for maximal attenuation of the external light 106, the image light 112 is propagated substantially without attenuation. And vice versa, when the second polarizer 102 is oriented for maximal attenuation of the image light 112, the external light 106 is propagated substantially without attenuation. A significant attenuation of the external light 106 may be required in situations where the wearer of the near-eye display 100 is in a bright outside environment, e.g. in a broad daylight. The attenuation of the external light 106 may also be used to convert the near-eye display for operation as a virtual reality (VR) display.

FIG. 2 schematically illustrates a plan view of the linear polarizer 102 in the XY plane. The linear polarizer 102 has a transmission axis 211 ("polarizing axis 211") and a blocking axis 212 perpendicular to the transmission axis 211. The linear polarizer 202 transmits light that is linearly polarized along the transmission axis 211 substantially without attenuation, or with a minimal attenuation, while substantially blocking light that is linearly polarized along the axis 212 orthogonal the transmission axis 211. The optical power ratio for light polarized along the X-axis and along the Y-axis downstream the polarizer 202 varies with the angle α of rotation of the linear polarizer 102 in the XY plane.

In one example, the NED 100 may be configured for mechanically, e.g. by hand, rotating the second polarizer 102 in the XY plane to adjust the balance of the image light 112 and the external light 106 at the eyebox 108. In another example, the second polarizer 102 may be electrically tunable so that the transmission axis 211 is effectively rotated in the XY plane. In some examples, the first polarizer 101 may also be mechanically rotatable or electrically tunable to adjust the polarization state of the external light 106 that propagates through the lightguide 110.

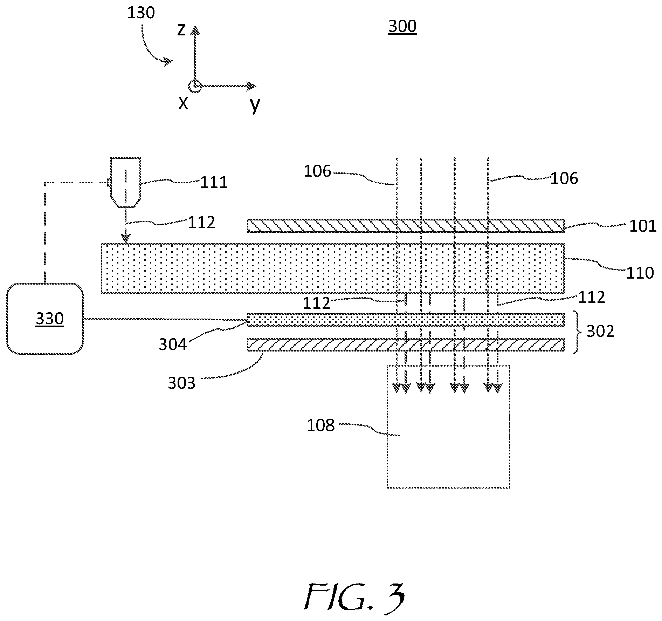

Turning to FIG. 3 with further reference to FIG. 1, a near-eye display 300 (FIG. 3) is an example of the near-eye display 100 of FIG. 1 where the second polarizer 102 is embodied with an electrically-tunable output polarizer 302. The output polarizer 302 may be controlled, e.g. by an electrical signal such as voltage, from a controller 330, to adjust the power balance of the image light 112 and the external light 106 at the eyebox 108.

In the illustrated example, the output polarizer 302 is implemented with a fixed linear polarizer 303 such as e.g. the one described above with reference to FIG. 2, and a tunable polarization rotator 304 upstream of the fixed polarizer 303. The tunable polarization rotator 304 is configured to rotate the linear polarizations of the image light 112 and the external light 106 by a same variable angle β. For the power balance at the eyebox 108, rotating the linear polarizations of the image beam 112 and the external beam 106 by a same variable angle β is substantially equivalent to rotating the transmission axis of the fixed polarizer 303 by an angle α = - β. The rotation angle β may be electrically varied responsive to the control signal from the controller 330. The tunable polarization rotator 304 may be embodied, e.g. using a liquid crystal (LC) variable retarder followed by a quarter wave plate (QWP), with the LC retarder and the QWP having their fast axes oriented at 45° with respect to each other.

In some examples, the controller 330 may be operably coupled to the projector 111 to vary the brightness thereof to provide an alternative degree of freedom for varying the brightness of the image light 112 at the eyebox 108 independently on the external light 106. A mechanically rotatable second polarizer 102 may be combined with the projector 111 that is electrically tunable in brightness.

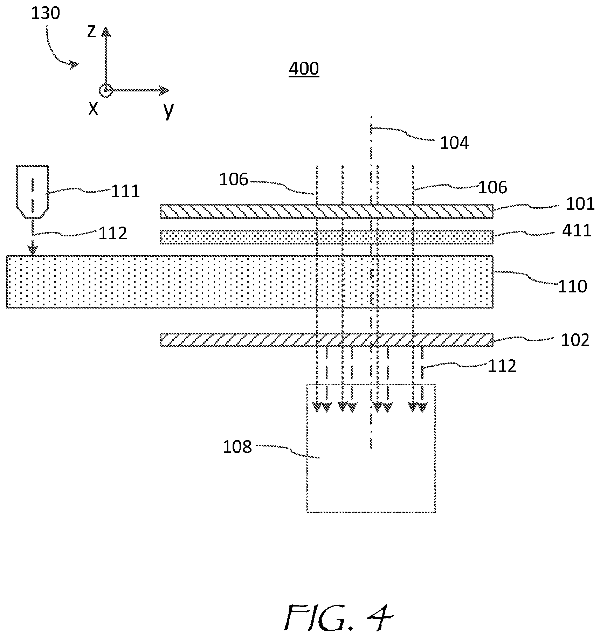

Turning to FIG. 4, an NED 400 is an example of the NED 100 of FIG. 1 and/or the NED 300 of FIG. 3, having a polarization rotator 411 between the first polarizer 101 and the lightguide 110. By tuning the polarization rotator 411, the polarization state of the external light 106 downstream of the polarization rotator 411 may be adjusted so that the polarization states of the external light 106 and the image light 112 at the second polarizer 102 are substantially orthogonal to each other. The polarization rotator 411 may be as described above with reference to the polarization rotator 304; e.g., the polarization rotator 411 may include a variable LC retarder having a fast or slow axis aligned with the transmission axis of the first polarizer 101, and followed by a suitably oriented QWP.

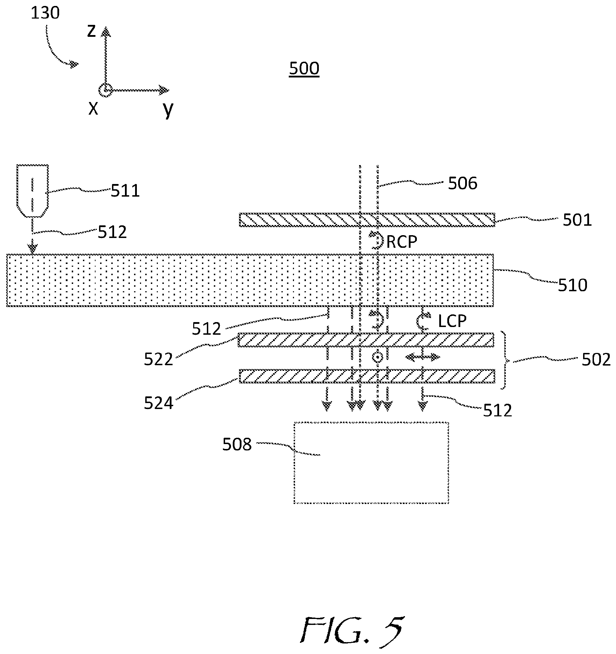

Turning to FIG. 5, an NED 500 is an example of the near-eye display 100 of FIG. 1, and includes elements that perform similar functions. In this example, a projector 511, which may be an example of the projector 111, emits image light 512 that is conveyed to an eyebox 508 by a lightguide 510. The lightguide 510 may be an example of the lightguide 110 of FIGs. 1, 3 and 4. Polarizers 501 and 502 are disposed at opposite faces of the lightguide 510 and opposite the eyebox 508. The polarizers 501 and 502 may be examples of the first and second polarizers 101 and 102, respectively, of the NED 100. The image light 512 downstream of the lightguide 510 is at least partially polarized to a circular polarization state ("first polarization state"), e.g. the right-handed circular polarization (RCP). The first polarizer 501, which is disposed in the path of the external light 506 upstream of the lightguide 510, is thus a circular polarizer configured to substantially block light of the first circular polarization, i.e. the RCP in this example, and to propagate the orthogonal circular polarization, e.g. light of the left-handed circular polarization (LCP) in this example. The second polarizer 502 is adjustable to vary transmitted fractions of the RCP and LCP light in opposite directions. E.g. the second polarizer 502 may be adjusted to increase a transmitted fraction of the RCP light while simultaneously decreasing a transmitted fraction of the LCP light. Alternatively, the second polarizer 502 may be adjusted to decrease a transmitted fraction of the RCP light while simultaneously increasing a transmitted fraction of the LCP light. Thus, the second polarizer 502 is operable to adjust the power balance, and thus the relative brightness, of the image and external light at the eyebox 508.

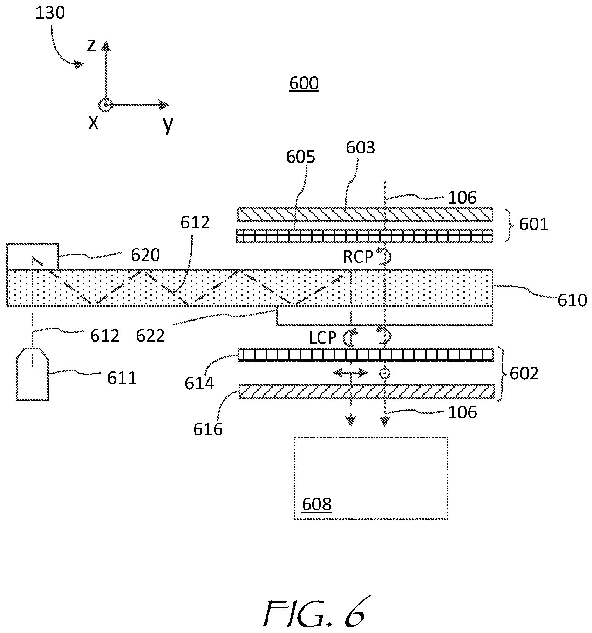

The second polarizer 502 may be embodied, e.g. using a QWP 522 followed by an adjustable linear polarizer 524. The QWP 522 transforms LCP and RCP light beams incident thereon to two linearly polarized light beams whose linear polarizations are mutually orthogonal. The adjustable linear polarizer 524 may be, e.g., a mechanically rotatable linear polarizer, as described above with reference to FIG. 2, or an electrically tunable linear polarizer, e.g. it may be an example of the electrically-tunable output polarizer 302 of the NED 300 of FIG. 3. The first polarizer 501 may be embodied with a linear polarizer followed by a suitably oriented QWP, e.g. as illustrated in FIG. 6 with reference to a circular polarizer 601.

Turning to FIG. 6, an NED 600 is an example of the near-eye display 500 of FIG. 5, and includes elements that perform similar functions. The NED 600 of FIG. 6 includes a projector 611, e.g. a scanning projector or a microdisplay-based projector, and a pupil-replicating lightguide 610. The pupil-replicating lightguide 610 includes an in-coupler 620 for in-coupling image light 612 into the pupil-replicating lightguide 610, and an out-coupler 622 for out-coupling portions of the image light 612 from the pupil-replicating lightguide 610 toward an eyebox 608. At least one of the in-coupler 620 and the out-coupler 622 may be implemented using polarization gratings, e.g. polarization volume hologram (PVH) gratings, which selectively diffract light of one handedness of circular polarization while propagating through light of the other, opposite handedness of circular polarization. By way of illustration, the pupil-replicating lightguide 610 is configured so that the out-coupled image light 612, propagating toward the eyebox 608 downstream of the lightguide 610, is predominantly LCP. For example, at least one of the in-coupler 620 and the out-coupler 622 may include a PVH grating that operates with right circular polarized (RCP) light, i.e. that diffracts the RCP light while propagating through the LCP light.

The pupil-replicating lightguide 610 may be "see-through", i.e. at least partially transparent for external light 106, with the out-coupler 622 toward the eyebox 608 allowing at least the LCP portion of the external light 606 to propagate therethrough toward the eyebox 608. The NED 600 may include a circular polarizer 601 in the path of the external light 606 upstream of the lightguide 610 for polarizing the external light 606 so that, downstream of the polarizer 601, the external light 606 is polarized to predominantly a circular polarization, e.g. RCP, that is orthogonal to the polarization of the out-coupled image light 612. The circular polarizer 601 may include a linear polarizer 603 followed by a suitably oriented QWP 605. In some examples the QWP 605 may be adjustable, i.e. mechanically rotatable or electrically tunable, to have the fast or slow axis at +45° or -45° relative to the polarizing axis of the linear polarizer 603, to output light of the desired handedness of the circular polarization, the RCP in the above example.

Downstream of the lightguide 610, the external light 606 and the image light 612 co-propagate along a common path being polarized to the orthogonal circular polarizations, the RCP (external light 606) and the LCP (out-coupled image light 612) in this example. An adjustable output polarizer 602 is disposed in the common path of the external and image light, and may be an example of the output polarizer 502 of NED 500 described above. In the illustrated example, the output polarizer 602 includes a QWP 614 followed by an adjustable linear polarizer 616. The function of the QWP 614 is to convert the RCP external light 606 and the LCP image light 612 into linearly polarized light of orthogonal polarization states. The function of the linear polarizer 616 is to adjust a balance of the optical power or brightness of the outside light 606 and the image light 612 that have been converted into the orthogonal linear polarization states by the QWP 614. Other forms of an output circular polarizer may be used. The adjustable linear polarizer may be mechanically rotatable or electrically tunable, e.g. as described above with reference to the polarizer 102 and the polarizer 302.

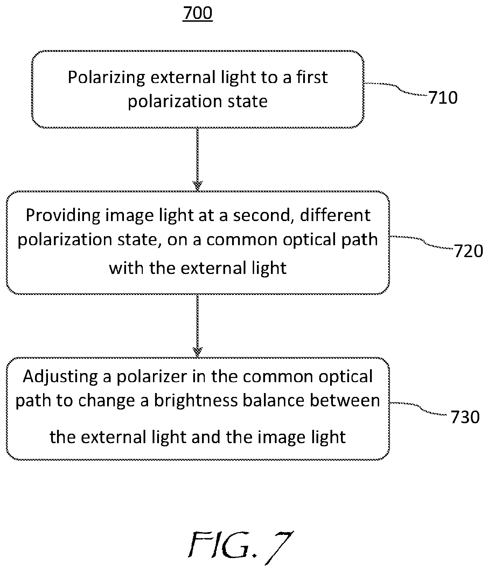

Referring to FIG. 7 with further reference to FIGs. 1-6, a method 700 for adjusting relative power of image light and external light in a near-eye display (NED), e.g. the NEDs 100 of FIG. 1, or the NEDs 300, 400, 500, and 600 of FIGs. 3 to 6, includes polarizing (FIG. 7; 710) the external light to have a first polarization state such as, for example, a linear or circular polarized state, by using a corresponding polarizer. Image light carrying an image, e.g. an artificially generated image to augment the external world view, is provided (720, FIG. 7) at a second, orthogonal polarization state such as an orthogonal linear polarization state or a circularly polarized state of an opposite handedness as the case may be, on a common optical path with the external light, e.g. on the light path 104 in FIG. 1. A polarizer located in the common optical path, e.g. the second polarizer 102 in FIG. 1 or FIG. 4, the output polarizer 302, 502, or 602 of FIGs. 3, 5, and 6 respectively, is adjusted (FIG. 7; 730) to change the power balance between the external light and the image light.

In some examples, the polarizing at 310 may include mechanically rotating the first polarizer to adjust the first polarization state. In some examples, the polarizing at 310 may include using a polarization rotator, such as the polarization rotator 411 of FIG. 4, to adjust the first polarization state.

In some examples, the adjusting at 730 includes mechanically rotating the second polarizer, e.g. the polarizer 102 in FIGs.1 and 4, the polarizer 524 in FIG. 5, or the polarizer 616 in FIG. 6. In some examples, the adjusting at 730 includes electronically tuning the second polarizer to rotate a transmission axis thereof. This may include, e.g. using a polarization rotator, such as the tunable polarization rotator 304 of FIG. 3.

The method 700 may further include combining the external light, e.g. light 106 of FIG, 1, with the image light, e.g. light 112 of FIG. 1, to propagate along the common optical path, e.g. path 104 of FIG. 1. The combining may be performed by a lightguide that guides the image light toward an eyebox, e.g. the lightguide 110 of FIGs. 1, 3, and 4, lightguide 510 of FIG, 5, or lightguide 610 of FIG.6, and/or an out-coupler of the lightguide, e.g. the out-coupler 622 of the lightguide 610 of FIG. 6.

Some examples of the method 700 may include propagating the external light in the first polarization state through a polarization rotator, e.g. the rotator 411 of FIG. 4, prior to the combining to adjust the first polarization state.

In examples of the method 700 where the first and second polarization states are circular polarization states, the method may include propagating the image and external light through a quarter wave plate, e.g. the QWP 614 of FIG. 6, prior to the adjusting at 730.

In some examples, the method 700 may include tuning a brightness of an image projector providing the image light, e.g. the projector 111 of FIGs. 1, 3, 4, projector 511 of FIG 5, or projector 611 of FIG. 6.

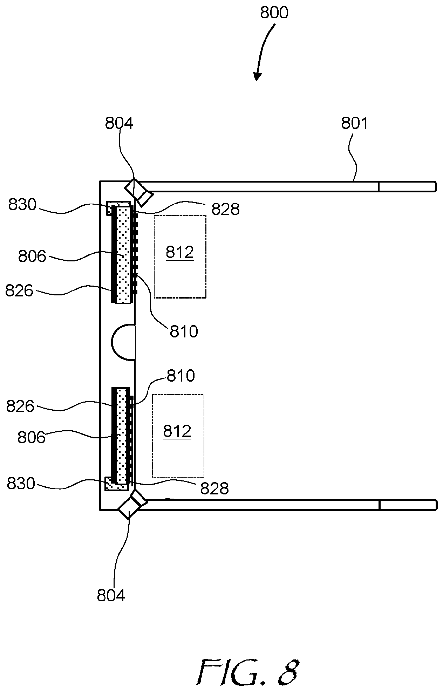

Referring now to FIG. 8, an augmented reality (AR) near-eye display 800 is an implementation of any of the near-eye displays disclosed herein, such as e.g. the near-eye display 100 of FIG. 1, and/or the near-eye displays 300, 400, 500, and 600 of FIGs. 3, 4, 5, and 6 respectively. The AR near-eye display 800 of FIG. 8 includes a frame 801 supporting, for each eye: a light engine or image projector 830 for providing an image light beam carrying an image in angular domain, a pupil-replicating lightguide 806 including any of the waveguides disclosed herein, for providing multiple offset portions of the image light beam to spread the image in angular domain across an eyebox 812, and a plurality of eyebox illuminators 810, shown as black dots, spread around a clear aperture of the pupil-replicating lightguide 806 on a surface that faces the eyebox 812. An eye-tracking camera 804 may be provided for each eyebox 812.

The purpose of the eye-tracking cameras 804 is to determine position and/or orientation of both eyes of the user. The eyebox illuminators 810 illuminate the eyes at the corresponding eyeboxes 812, allowing the eye-tracking cameras 804 to obtain the images of the eyes, as well as to provide reference reflections i.e. glints. The glints may function as reference points in the captured eye image, facilitating the eye gazing direction determination by determining position of the eye pupil images relative to the glint positions. To avoid distracting the user with the light of the eyebox illuminators 810, the latter may be made to emit light invisible to the user. For example, infrared light may be used to illuminate the eyeboxes 812.

A first polarizer 826 and an adjustable second, or output, polarizer 828 are further provided at opposite sides of each lightguide 806 across from the corresponding eyebox 812. The input and output polarizers 826, 828, embody the first and second polarizers 101 and 102 described above with reference to FIGs. 1, 3, 4, or polarizers 501 and 502 of FIG. 6, or polarizers 601 and 602 of FIG. 6. The function of the polarizers 826, 828 is to adjust the relative brightness of the image and external light at the eyebox 812.

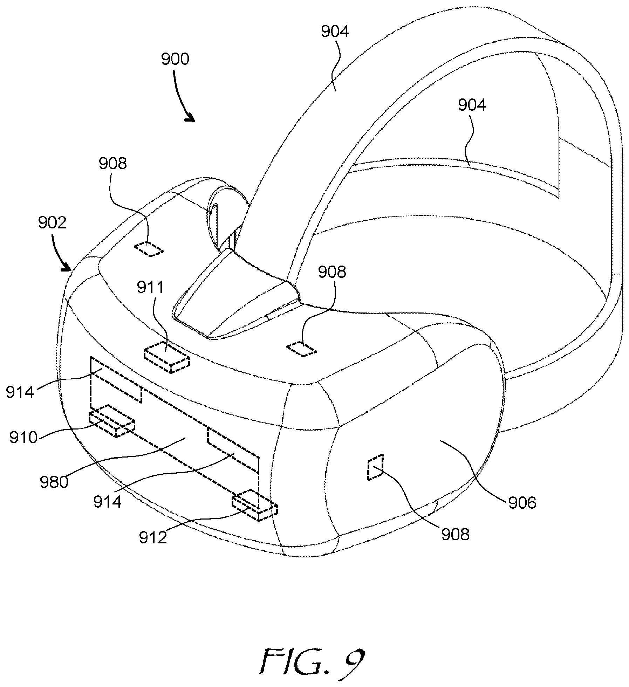

Turning to FIG. 9, an HMD 900 is an example of an AR/VR wearable display system which encloses the user's face, for a greater degree of immersion into the AR/VR environment. The HMD 900 may generate virtual 3D imagery. The HMD 900 may include a front body 902 and a band 904 that can be secured around the user's head. The front body 902 is configured for placement in front of eyes of a user in a reliable and comfortable manner. The front body 902 may be partially transparent in some examples to allow some external light into the eyes of the wearer. A display system 980 may be disposed in the front body 902 for presenting AR/VR imagery to the user. The display system 980 may include any of near-eye displays disclosed herein, such as, for example, the near-eye display 100 of FIG. 1 and/or the near-eye display 300, 400, 500, 600 of FIGs. 3 to 6, respectively. Sides 906 of the front body 902 may be opaque or transparent.

In some examples, the front body 902 includes locators 908 and an inertial measurement unit (IMU) 910 for tracking acceleration of the HMD 900, and position sensors 912 for tracking position of the HMD 900. The IMU 910 is an electronic device that generates data indicating a position of the HMD 900 based on measurement signals received from one or more of position sensors 912, which generate one or more measurement signals in response to motion of the HMD 900. Examples of position sensors 912 include: one or more accelerometers, one or more gyroscopes, one or more magnetometers, another suitable type of sensor that detects motion, a type of sensor used for error correction of the IMU 910, or some combination thereof. The position sensors 912 may be located external to the IMU 910, internal to the IMU 910, or some combination thereof.

The locators 908 are traced by an external imaging device of a virtual reality system, such that the virtual reality system can track the location and orientation of the entire HMD 900. Information generated by the IMU 910 and the position sensors 912 may be compared with the position and orientation obtained by tracking the locators 908, for improved tracking accuracy of position and orientation of the HMD 900. Accurate position and orientation is important for presenting appropriate virtual scenery to the user as the latter moves and turns in 3D space.

The HMD 900 may further include a depth camera assembly (DCA) 911, which captures data describing depth information of a local area surrounding some or all of the HMD 900. The depth information may be compared with the information from the IMU 910, for better accuracy of determination of position and orientation of the HMD 900 in 3D space.

The HMD 900 may further include an eye tracking system 914 for determining orientation and position of user's eyes in real time. The obtained position and orientation of the eyes also allows the HMD 900 to determine the gaze direction of the user and to adjust the image generated by the display system 980 accordingly. The determined gaze direction and vergence angle may be used to adjust the display system 980 to reduce the vergence-accommodation conflict. The direction and vergence may also be used for displays' exit pupil steering as disclosed herein. Furthermore, the determined vergence and gaze angles may be used for interaction with the user, highlighting objects, bringing objects to the foreground, creating additional objects or pointers, etc. An audio system may also be provided including e.g. a set of small speakers built into the front body 902.

Embodiments of the present disclosure may include, or be implemented in conjunction with, an artificial reality system. An artificial reality system adjusts sensory information about outside world obtained through the senses such as visual information, audio, touch (somatosensation) information, acceleration, balance, etc., in some manner before presentation to a user. By way of non-limiting examples, artificial reality may include virtual reality (VR), augmented reality (AR), mixed reality (MR), hybrid reality, or some combination and/or derivatives thereof. Artificial reality content may include entirely generated content or generated content combined with captured (e.g., real-world) content. The artificial reality content may include video, audio, somatic or haptic feedback, or some combination thereof. Any of this content may be presented in a single channel or in multiple channels, such as in a stereo video that produces a three-dimensional effect to the viewer. Furthermore, in some embodiments, artificial reality may also be associated with applications, products, accessories, services, or some combination thereof, that are used to, for example, create content in artificial reality and/or are otherwise used in (e.g., perform activities in) artificial reality. The artificial reality system that provides the artificial reality content may be implemented on various platforms, including a wearable display such as an HMD connected to a host computer system, a standalone HMD, a near-eye display having a form factor of eyeglasses, a mobile device or computing system, or any other hardware platform capable of providing artificial reality content to one or more viewers.

The present disclosure is not to be limited in scope by the specific embodiments described herein. Indeed, other various embodiments and modifications, in addition to those described herein, will be apparent to those of ordinary skill in the art from the foregoing description and accompanying drawings. For example, in some embodiments not covered by the subject-matter of the claims, the image light may exit a pupil-replicating lightguide of the NED being only weakly polarized, or substantially unpolarized, and the power balance at the eyebox may be adjusted by varying the fraction of the polarized external light that reaches the eyebox of the NED. In some embodiments, varying the fraction of the external light reaching the eyebox using an output polarizer may be complemented by tuning the brightness of the projector generating the image light. Furthermore, features described herein with reference to a particular embodiment may be used in any of the other embodiments where possible. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes.

## Claims

1. A near-eye display, NED, (100) comprising:
a first polarizer (101) in a path (104) of external light (106) to an eyebox (108) of the NED (100), the first polarizer configured to polarize the external light (106) to have a first polarization state;
a see-through lightguide (110) disposed in the path (104) between the first polarizer (101) and the eyebox (108), the lightguide (110) being configured to convey image light (112) to the eyebox (108) in a second polarization state while transmitting the external light (106) to the eyebox (108) in the first polarization state, wherein the second polarization state is orthogonal to the first polarization state; and
a second polarizer (102) in the path (104) downstream of the see-through lightguide (110), the second polarizer (102) being operable to variably adjust a power balance of the external light (106) and the image light (112) at the eyebox (108).

2. The NED (100) of claim 1, wherein the second polarizer (102) is mechanically rotatable to vary the power balance;
preferably wherein the first polarizer (101) is mechanically rotatable for adjusting the first polarization state.

3. The NED (100) of claim 1, wherein the first polarizer (101) is electrically tunable to rotate a transmission axis thereof.

4. The NED (100) of any preceding claim, wherein the first and second polarization states are linear polarization states.

5. The NED (100) of any preceding claim, further comprising a polarization rotator (411) between the first polarizer (101) and the lightguide (110).

6. The NED (100) of any preceding claim, further comprising a laterally-offset projector (111) operably coupled to the see-through lightguide (110) for providing the image light (112) thereto;
preferably wherein the projector (111) is tunable in brightness.

7. The NED (100) of any preceding claim, wherein the see-through lightguide (110) comprises:
a volume holographic grating for coupling the image light (112) out of the lightguide (110); and/or
a liquid crystal grating.

8. A method (700) of adjusting relative brightness of image light and external light in a near-eye display, NED, the method comprising:
polarizing (710) the external light to have a first polarization state;
providing (720) the image light at a second, orthogonal polarization state, on a common optical path with the external light;
conveying the image light and the external light to the eyebox; and
adjusting (730) a polarizer in the common optical path to variably change a brightness balance between the external light and the image light.

9. The method (700) of claim 8, wherein the adjusting comprises mechanically rotating the polarizer.

10. The method (700) of claim 8, wherein the adjusting comprises electronically tuning the polarizer to rotate a transmission axis thereof.

11. The method (700) of any of claims 8 to 10, wherein the polarizing comprises mechanically rotating or electrically tuning an input polarizer to adjust the first polarization state.

12. The method (700) of any of claims 8 to 11, further comprising combining the external light with the image light to propagate along the common optical path;
preferably wherein the first polarization state is linear, comprising propagating the external light in the first polarization state through a polarization rotator prior to the combining to adjust the first polarization state.

## Patentansprüche

1. Eine augennahe Anzeige, NED, (100), die Folgendes beinhaltet:
einen ersten Polarisator (101) in einem Pfad (104) von externem Licht (106) zu einer Eyebox (108) der NED (100), wobei der erste Polarisator konfiguriert ist, um das externe Licht (106) so zu polarisieren, dass es einen ersten Polarisationszustand aufweist;
einen durchsichtigen Lichtleiter (110), der in dem Pfad (104) zwischen dem ersten Polarisator (101) und der Eyebox (108) angeordnet ist, wobei der Lichtleiter (110) konfiguriert ist, um Bildlicht (112) in einem zweiten Polarisationszustand zu der Eyebox (108) zu befördern, während er das externe Licht (106) in dem ersten Polarisationszustand zu der Eyebox (108) durchlässt, wobei der zweite Polarisationszustand orthogonal zu dem ersten Polarisationszustand ist; und
einen zweiten Polarisator (102) in dem Pfad (104) nach dem durchsichtigen Lichtleiter (110), wobei der zweite Polarisator (102) betreibbar ist, um eine Leistungsbalance des externen Lichts (106) und des Bildlichts (112) an der Eyebox (108) variabel einzustellen.

2. NED (100) gemäß Anspruch 1, wobei der zweite Polarisator (102) mechanisch drehbar ist, um die Leistungsbalance zu variieren;
wobei vorzugsweise der erste Polarisator (101) zum Einstellen des ersten Polarisationszustands mechanisch drehbar ist.

3. NED (100) gemäß Anspruch 1, wobei der erste Polarisator (101) elektrisch abstimmbar ist, um dessen Durchlassachse zu drehen.

4. NED (100) gemäß einem der vorhergehenden Ansprüche, wobei der erste und der zweite Polarisationszustand lineare Polarisationszustände sind.

5. NED (100) gemäß einem der vorhergehenden Ansprüche, die ferner einen Polarisationsrotator (411) zwischen dem ersten Polarisator (101) und dem Lichtleiter (110) beinhaltet.

6. NED (100) gemäß einem der vorhergehenden Ansprüche, die ferner einen seitlich versetzten Projektor (111) beinhaltet, der betriebsmäßig mit dem durchsichtigen Lichtleiter (110) gekoppelt ist, um diesem das Bildlicht (112) bereitzustellen;
wobei vorzugsweise der Projektor (111) in der Helligkeit abstimmbar ist.

7. NED (100) gemäß einem der vorhergehenden Ansprüche, wobei der durchsichtige Lichtleiter (110) Folgendes beinhaltet:
ein volumenholografisches Gitter zum Auskoppeln des Bildlichts (112) aus dem Lichtleiter (110); und/oder
ein Flüssigkristallgitter.

8. Ein Verfahren (700) zum Einstellen der relativen Helligkeit von Bildlicht und externem Licht in einer augennahen Anzeige, NED, wobei das Verfahren Folgendes beinhaltet:
Polarisieren (710) des externen Lichts derart, dass es einen ersten Polarisationszustand aufweist;
Bereitstellen (720) des Bildlichts in einem zweiten, orthogonalen Polarisationszustand auf einem gemeinsamen optischen Pfad mit dem externen Licht;
Befördern des Bildlichts und des externen Lichts zu der Eyebox; und
Einstellen (730) eines Polarisators in dem gemeinsamen optischen Pfad, um eine Helligkeitsbalance zwischen dem externen Licht und dem Bildlicht variabel zu ändern.

9. Verfahren (700) gemäß Anspruch 8, wobei das Einstellen das mechanische Drehen des Polarisators beinhaltet.

10. Verfahren (700) gemäß Anspruch 8, wobei das Einstellen das elektronische Abstimmen des Polarisators beinhaltet, um dessen Durchlassachse zu drehen.

11. Verfahren (700) gemäß einem der Ansprüche 8 bis 10, wobei das Polarisieren das mechanische Drehen oder elektrische Abstimmen eines Eingangspolarisators beinhaltet, um den ersten Polarisationszustand einzustellen.

12. Verfahren (700) gemäß einem der Ansprüche 8 bis 11, das ferner das Kombinieren des externen Lichts mit dem Bildlicht beinhaltet, sodass es sich entlang des gemeinsamen optischen Pfads ausbreitet;
wobei vorzugsweise der erste Polarisationszustand linear ist, beinhaltend das Sich-Ausbreiten-Lassen des externen Lichts in dem ersten Polarisationszustand durch einen Polarisationsrotator vor dem Kombinieren, um den ersten Polarisationszustand einzustellen.

## Revendications

1. Un dispositif d'affichage près de l'œil, NED, (100) comprenant :
un premier polariseur (101) dans un trajet (104) de lumière externe (106) vers un espace de positionnement de l'œil (*eyebox*) (108) du NED (100), le premier polariseur étant configuré pour polariser la lumière externe (106) afin d'avoir un premier état de polarisation ;
un guide de lumière semi-transparent (110) disposé dans le trajet (104) entre le premier polariseur (101) et l'espace de positionnement de l'œil (108), le guide de lumière (110) étant configuré pour acheminer une lumière d'image (112) vers l'espace de positionnement de l'œil (108) dans un deuxième état de polarisation tout en transmettant la lumière externe (106) vers l'espace de positionnement de l'œil (108) dans le premier état de polarisation, dans lequel le deuxième état de polarisation est orthogonal au premier état de polarisation ; et
un deuxième polariseur (102) dans le trajet (104) en aval du guide de lumière semi-transparent (110), le deuxième polariseur (102) étant opérationnel pour ajuster de manière variable un équilibre de puissance de la lumière externe (106) et de la lumière d'image (112) au niveau de l'espace de positionnement de l'œil (108).

2. Le NED (100) de la revendication 1, dans lequel le deuxième polariseur (102) est apte à effectuer une rotation mécanique pour faire varier l'équilibre de puissance ; préférablement dans lequel le premier polariseur (101) est apte à effectuer une rotation mécanique pour ajuster le premier état de polarisation.

3. Le NED (100) de la revendication 1, dans lequel le premier polariseur (101) est électriquement accordable pour faire effectuer une rotation à un axe de transmission de celui-ci.

4. Le NED (100) de n'importe quelle revendication précédente, dans lequel les premier et deuxième états de polarisation sont des états de polarisation linéaires.

5. Le NED (100) de n'importe quelle revendication précédente, comprenant en outre un rotateur de polarisation (411) entre le premier polariseur (101) et le guide de lumière (110).

6. Le NED (100) de n'importe quelle revendication précédente, comprenant en outre un projecteur décalé latéralement (111) couplé de manière opérationnelle au guide de lumière semi-transparent (110) pour fournir la lumière d'image (112) à celui-ci ; préférablement dans lequel le projecteur (111) est accordable en luminosité.

7. Le NED (100) de n'importe quelle revendication précédente, dans lequel le guide de lumière semi-transparent (110) comprend :
un réseau holographique volumique pour coupler la lumière d'image (112) hors du guide de lumière (110) ; et/ou
un réseau à cristaux liquides.

8. Un procédé (700) d'ajustement de la luminosité relative d'une lumière d'image et d'une lumière externe dans un dispositif d'affichage près de l'œil, NED, le procédé comprenant :
la polarisation (710) de la lumière externe afin d'avoir un premier état de polarisation ;
la fourniture (720) de la lumière d'image à un deuxième état de polarisation, orthogonal, sur un trajet optique commun avec la lumière externe ;
l'acheminement de la lumière d'image et de la lumière externe vers l'espace de positionnement de l'œil ; et
l'ajustement (730) d'un polariseur dans le trajet optique commun pour modifier de manière variable un équilibre de luminosité entre la lumière externe et la lumière d'image.

9. Le procédé (700) de la revendication 8, dans lequel l'ajustement comprend une rotation mécanique du polariseur.

10. Le procédé (700) de la revendication 8, dans lequel l'ajustement comprend un accord électronique du polariseur pour faire effectuer une rotation à un axe de transmission de celui-ci.

11. Le procédé (700) de n'importe lesquelles des revendications 8 à 10, dans lequel la polarisation comprend une rotation mécanique ou un accord électrique d'un polariseur d'entrée pour ajuster le premier état de polarisation.

12. Le procédé (700) de n'importe lesquelles des revendications 8 à 11, comprenant en outre la combinaison de la lumière externe avec la lumière d'image pour se propager le long du trajet optique commun ;
préférablement dans lequel le premier état de polarisation est linéaire, comprenant la propagation de la lumière externe dans le premier état de polarisation à travers un rotateur de polarisation avant la combinaison pour ajuster le premier état de polarisation.
